# EUROPEAN PATENT SPECIFICATION

(11) **EP 2 792 586 B1**
(45) Date of publication and mention of the grant of the patent: **23.12.2015**
(21) Application number: 13190934.3
(22) Date of filing: 30.10.2013
(51) Int. Cl.: B62J 17/02

(54) **Motorcycle**
Motorrad
Motocyclette

(30) Priority: 18.04.2013 JP 2013087391
(43) Date of publication of application: 22.10.2014
(73) Proprietor: Yamaha Hatsudoki Kabushiki Kaisha, Iwata-shi, Shizuoka 438-8501 (JP)
(72) Inventor: Tokitou, Takamasa, Iwata-shi, Shizuoka 438-8501 (JP)
(74) Representative: Grünecker Patent- und Rechtsanwälte PartG mbB

(56) References cited:
- EP-A2- 2 574 529
- JP-A- 2004 210 227
- KR-A- 20100 083 714

## Description

The present invention relates to a motorcycle.

Some motorcycles are equipped with shrouds. The shrouds are cover members to be disposed on the laterally outer sides of a fuel tank. For example, Japan Laid-open Patent Application Publication No. JP-A-2010-215053 describes shrouds that the required attachment strengths thereof can be reliably achieved while the amount of air to be directed to the engine can be increased during travelling of a motorcycle.

Specifically, in the motorcycle described in the Publication No. JP-A-2010-215053, the interval between the front ends of the right and left shrouds is greater than the width of the fuel tank. Further, the outermost portions of the shrouds are positioned forwards of attachment portions for attaching the shrouds to the fuel tank.

Another example is known from prior art document KR-A-1020100083714.

However, the shapes of the shrouds are restricted in the aforementioned motorcycles. Further, when being enlarged for increasing the amount of air to be directed to the engine by the shrouds, the shrouds receive large force from the air during travelling of the motorcycle. Therefore, chances are that the attachment strengths of the shrouds are deteriorated.

It is an object of the present invention to provide a motorcycle whereby flexibility in shape of a shroud can be enhanced; the attachment strength of the shroud can be increased; and the amount of air to be directed to an engine can be increased during travelling of the motorcycle.

According to the present invention said object is solved by a motorcycle having the features of independent claim 1. Preferred embodiments are laid down in the dependent claims.

A motorcycle according to an aspect of the present invention includes a vehicle body frame, a head light unit, a fuel tank, an engine and a shroud. The vehicle body frame includes a head pipe. The head light unit is disposed forwards of the head pipe. The fuel tank is disposed rearwards of the head pipe and astride the vehicle body frame. The engine is disposed under the fuel tank. The shroud is attached to the fuel tank, while being disposed laterally outwards of the fuel tank. The shroud includes a front end portion. The front end portion of the shroud is positioned forwards of the fuel tank. The shroud is disposed separately from the head light unit. The shroud includes an inner lateral member and an outer lateral member. The outer lateral member is provided separately from the inner lateral member. The outer lateral member is disposed laterally outwards of the inner lateral member. The inner lateral member and the outer lateral member produce an airflow path therebetween. The inner lateral member includes an inner lateral member rear portion. The inner lateral member rear portion is disposed rearwards of a rear edge of the outer lateral member in a vehicle side view. A portion of the inner lateral member of the shroud is disposed rearward of the engine. A fin portion for directing an air stream toward the backwards is disposed between the inner lateral member and the outer lateral member.

In the present motorcycle, the airflow path may be produced between the inner lateral member and the outer lateral member. Therefore, the airflow path may be produced on the laterally outwards of the inner lateral member. Therefore, the force applied from the air stream flowing laterally inwards of the inner lateral member and that applied from the air stream flowing laterally outwards of the inner lateral member may be balanced out. It may thereby be possible to reduce the force received by the inner lateral member. Further, the inner lateral member rear portion may be positioned rearwards of the rear edge of the outer lateral member in a vehicle side view. Therefore, it may be possible to further reduce the force that the outer lateral member receives from the air stream in comparison with the structure that the outer lateral member is extended to a position rearward of the inner lateral member rear portion. Accordingly, large attachment strength can be reliably achieved for the shroud. Further, the shroud can be enlarged due to the large attachment strength reliably achieved for the shroud. Accordingly, the amount of air to be directed towards the engine can be increased during travelling. Yet further, less restriction may be imposed on the shape of the shroud in increasing the amount of air to be directed towards the engine. Therefore, flexibility in shape of the shroud can be enhanced.

The inner lateral member rear portion preferably includes an outer fin portion for directing an air stream on an outer lateral surface of the inner lateral member rear portion. In this case, the air stream, flowing laterally outwards of the inner lateral member rear portion, can be directed by means of the outer fin portion. Therefore, the air can smoothly flow through the laterally outward of the inner lateral member rear portion.

The outer fin portion is preferably at least partially visible in a vehicle side view. In this case, it is possible to direct, by means of the outer fin portion, the air stream flowing through the space exposed to the outside in a position rearward of the outer lateral member.

The inner lateral member preferably includes an inner lateral member front portion. The inner lateral member front portion is positioned forwards of the inner lateral member rear portion. The inner lateral member front portion includes an inner fin portion. The inner fin portion directs an air stream on an inner lateral surface of the inner lateral member front portion. In this case, the air stream, flowing laterally inwards of the inner lateral member, can be directed by means of the inner fin portion. Therefore, the air can smoothly flow through the laterally inward of the inner lateral member rear portion.

The inner fin portion is preferably at least partially visible in a vehicle front view. In this case, the air stream, flowing into the airflow path from ahead of the vehicle, can be efficiently directed by means of the inner fin portion.

The inner lateral member preferably includes an outer fin portion and an inner fin portion. The outer fin portion directs an air stream on an outer lateral surface of the inner lateral member. The inner fin portion directs an air stream on an inner lateral surface of the inner lateral member. In this case, the air stream, flowing laterally outwards of the inner lateral member, can be directed by means of the outer fin portion. Further, the air stream, flowing laterally inwards of the inner lateral member, can be directed by means of the inner fin portion. Therefore, the air can smoothly flow through the both laterally outward and inward of the inner lateral member rear portion. Further, the outer fin portion and the inner fin portion are disposed on the inner lateral member. Therefore, flexibility in shape of the outer lateral member can be enhanced.

The fuel tank preferably includes a recessed portion upwardly recessed on a bottom surface thereof. The inner fin portion is positioned laterally outwards of the recessed portion in a vehicle front view. In this case, the air stream can be directed to the recessed portion of the fuel tank by means of the inner fin portion. Accordingly, the fuel tank can be efficiently cooled down.

The shroud preferably includes an opening. The opening causes the airflow path and a space produced laterally inwards of the inner lateral member to communicate with each other. In this case, the air stream, flowing laterally inwards of the inner lateral member, can be partially directed into the airflow path through the opening.

The opening is preferably positioned forwards of the outer fin portion in a vehicle side view. In this case, the air stream, flowing into the airflow path through the opening, can be directed by means of the outer fin portion.

The opening is preferably positioned under the inner fin portion in a vehicle side view. In this case, the air stream flowing laterally inwards of the inner lateral member can be directed while being divided into an air stream directed by the inner fin portion and an air stream flowing into the air flow path through the opening.

The opening is preferably bored in the inner lateral member. In this case, even when such opening is bored in the inner lateral member, large stiffness can be reliably achieved for the inner lateral member by the structure that the inner lateral member is provided with the outer fin portion and/or the inner fin portion.

The inner lateral member preferably has a fixation portion. The fixation portion fixes the inner lateral member and the outer lateral member to each other. The fixation portion is positioned between the outer fin portion and the inner fin portion in a vehicle side view. In this case, the inner lateral member and the outer lateral member are fixed at the portion that is disposed between the outer fin portion and the inner fin portion and receives the force applied from the air stream. Therefore, the inner lateral member and the outer lateral member can be rigidly fixed to each other.

The fixation portion preferably includes a first aperture and a second aperture. The outer lateral member includes a first protrusion and a second protrusion. The first protrusion is configured to be hooked on an edge of the first aperture. The second protrusion is configured to press an edge of the second aperture in a direction of causing the first protrusion to be hooked on the edge of the first aperture. In this case, the inner lateral member and the outer lateral member can be rigidly fixed to each other.

The shroud preferably includes an opening. The opening causes the airflow path and a space produced laterally inwards of the inner lateral member to communicate with each other. In this case, the air stream, flowing laterally inwards of the inner lateral member, can be partially directed into the airflow path through the opening.

The opening is preferably visible in a vehicle front view. In this case, the air stream flowing from ahead of the vehicle can be efficiently taken into the opening.

The shroud preferably includes a plurality of attachment portions for attaching the shroud to the fuel tank. A portion of the plurality of attachment portions is mounted to the outer lateral member. The rest of the plurality of attachment portions is mounted to the inner lateral member. In this case, the attachment portions are dispersedly positioned. Therefore, the shroud can be stably attached to the fuel tank.

According to the present invention, it is possible to provide a motorcycle whereby flexibility in shape of a shroud can be enhanced; the attachment strength of the shroud can be increased; and the amount of air to be directed to an engine can be increased during travelling of the motorcycle.

### BRIEF DESCRIPTION OF THE DRAWINGS

Referring now to the attached drawings which form a portion of this original disclosure:
FIG 1 is a side view of a motorcycle according to an exemplary embodiment;
FIG 2 is a front view of the motorcycle;
FIG. 3 is a side view of a left shroud;
FIG. 4 is a front view of the left shroud;
FIG. 5 is an exploded view of the left shroud;
FIG. 6 is a side view of an outer lateral member;
FIG. 7 is a side view of an inner lateral member;
FIG. 8 is a diagram illustrating the inner lateral surface of the left shroud;
FIG. 9 is a cross-sectional view of FIG. 3 taken along a line A-A;
FIG. 10 is an enlarged view of the inner lateral surface of the left shroud; and
FIG. 11 is a side view of a fuel tank, the left shroud and a portion of a vehicle frame.

### DETAILED DESCRIPTION OF THE EMBODIMENTS

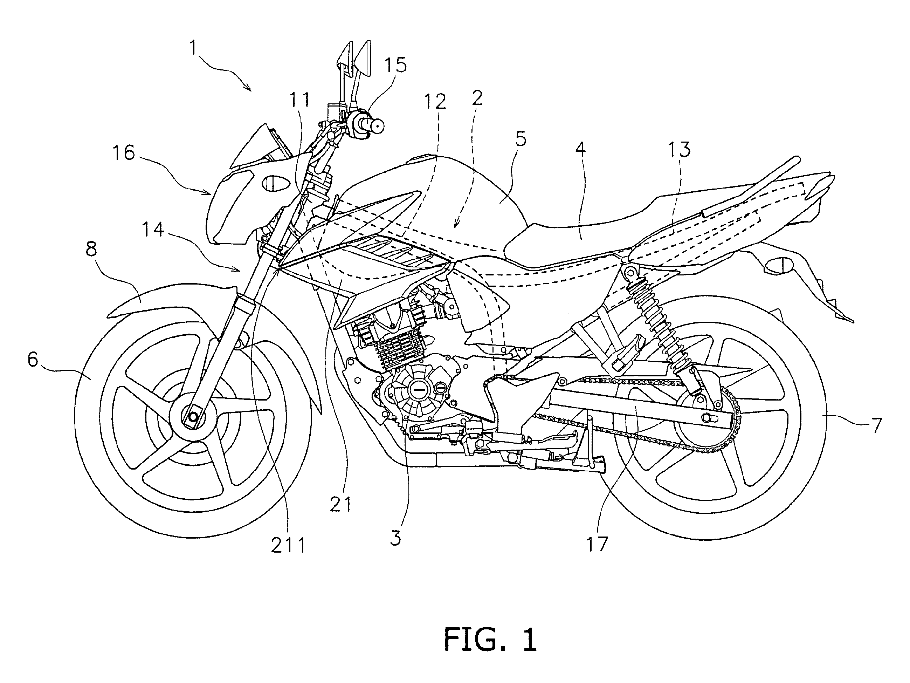

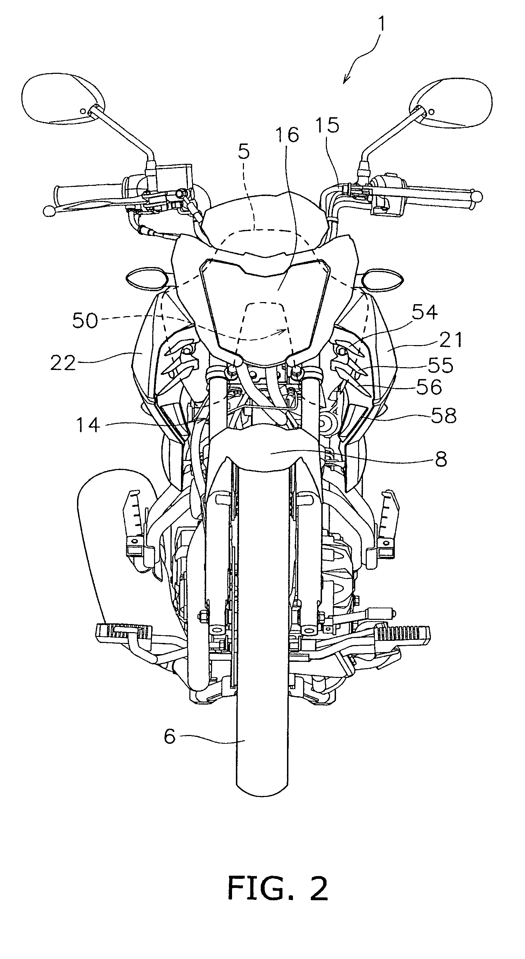

FIG. 1 illustrates a motorcycle according to an exemplary embodiment of the present teaching. FIG. 1 is a side view of the motorcycle 1. FIG. 2 is a front view of the motorcycle 1. It should be noted that in the following explanation, the terms "front", "rear", "right" and "left" mean corresponding directions seen from a rider riding on the motorcycle 1 unless especially explained. Further, the term "laterally inwards" means a direction closer to the center of the motorcycle 1 in a vehicle width direction. On the other hand, the term "laterally outwards" means a direction away from the center of the motorcycle 1 in the vehicle width direction. The motorcycle 1 includes a vehicle body frame 2, an engine 3, a seat 4, a fuel tank 5, a front wheel 6 and a rear wheel 7.

The vehicle body frame 2 includes a head pipe 11, a front frame 12 and a rear frame 13. A front fork 14 is supported by the head pipe 11. A handle 15 is fixed to the upper end of the front fork 14. Further, a head light unit 16 is disposed forwards of the head pipe 11. The front wheel 6 is rotatably supported by the lower portion of the front fork 14. A front fender 8 is disposed over the front wheel 6.

A swing arm 17 is coupled to the rear portion of the front frame 12, while being pivotable up and down. The rear wheel 7 is rotatably supported by the rear portion of the swing arm 17. The rear frame 13 is backwardly extended from the front frame 12.

The seat 4 and the fuel tank 5 are attached to the upper portion of the vehicle body frame 2. The seat 4 is disposed over the rear frame 13. The fuel tank 5 is disposed forwards of the seat 4. The fuel tank 5 is disposed rearwards of the head pipe 11 and astride the vehicle body frame 2. When described in detail, the fuel tank 5 is disposed over the front frame 12. As illustrated in FIG. 2, the bottom surface of the fuel tank 5 includes a recessed portion 50 recessed upwards.

The engine 3 is configured to transmit driving force to the rear wheel 7 through transmission members such as a chain. The engine 3 is disposed under the fuel tank 5. The engine 3 is supported by the front frame 12.

As illustrated in FIG. 2, the motorcycle 1 includes a left shroud 21 and a right shroud 22. The left shroud 21 is disposed leftwards of the fuel tank 5. The right shroud 22 is disposed rightwards of the fuel tank 5. The left and right shrouds 21 and 22 are attached to the fuel tank 5. The left and right shrouds 21 and 22 are disposed separately from the head light unit 16.

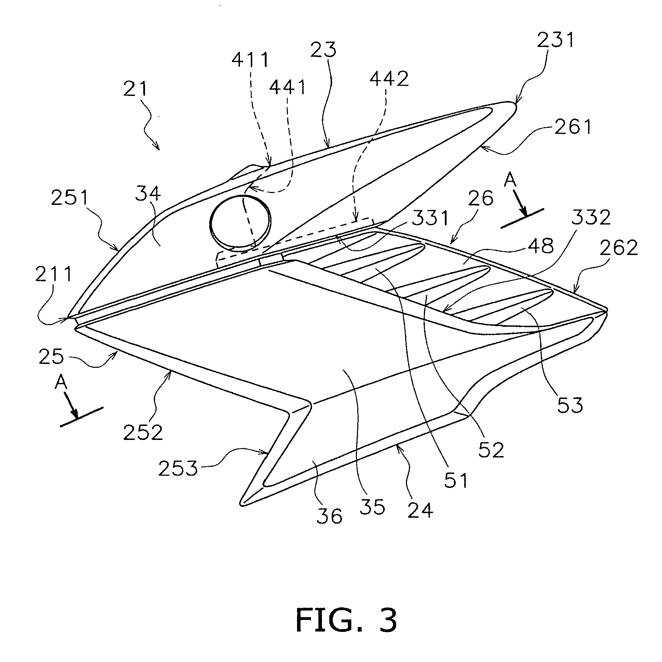

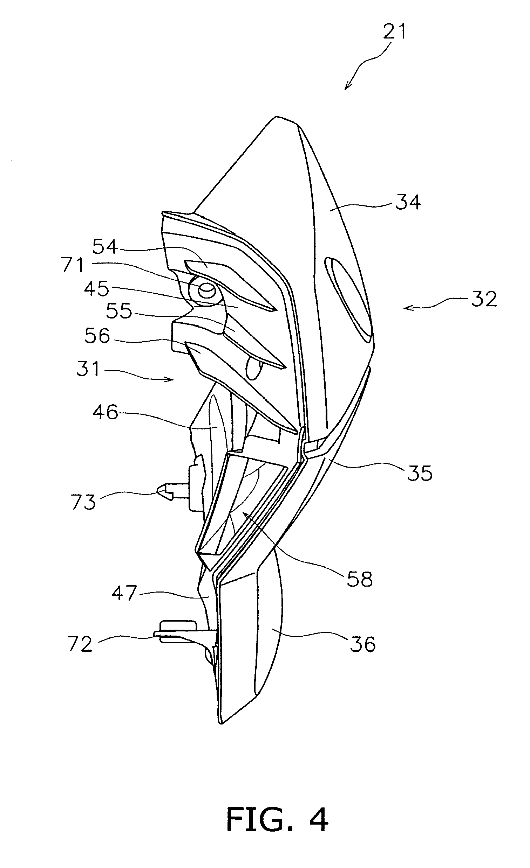

FIG. 3 is a side view of the left shroud 21. FIG. 4 is a front view of the left shroud 21. As illustrated in FIG. 3, in a vehicle side view, the left shroud 21 includes an upper edge 23, a lower edge 24, a front edge 25 and a rear edge 26. The upper edge 23 is slanted rearwards and obliquely upwards. The lower edge 24 is slanted rearwards and obliquely upwards.

The front edge 25 includes a first front edge portion 251, a second front edge portion 253 and a third front edge portion 253. The first front edge portion 251 is extended forwards and obliquely downwards from the front end of the upper edge 23. The second front edge portion 252 is positioned under the first front edge portion 251. The second front edge portion 252 is extended rearwards and obliquely downwards from the lower end of the first front edge portion 251. The third front edge portion 253 is positioned under the second front edge portion 252. The third front edge portion 253 is extended forwards and obliquely downwards from the lower end of the second front edge portion 252.

The left shroud 21 includes a front end portion 211. The front end portion 211 is positioned between the first front edge portion 251 and the second front edge portion 252. As illustrated in FIG. 1, the front end portion 211 is positioned forwards of the fuel tank 5. In a vehicle side view, the front edge 25 has a shape forwardly protruded between the first front edge portion 251 and the second front edge portion 252. In a vehicle side view, the front edge 25 has a shape backwardly recessed between the second front edge portion 252 and the third front edge portion 253.

The rear edge 26 includes a first rear edge portion 261 and a second rear edge portion 262. The first rear edge portion 261 is extended forwards and obliquely downwards from the rear end of the upper edge 23. The second rear edge portion 262 is positioned under the first rear edge portion 261. The second rear edge portion 262 is extended rearwards and obliquely downwards from the lower end of the first rear edge portion 261. The rear edge 26 has a shape forwardly recessed between the first rear edge portion 261 and the second rear edge portion 262.

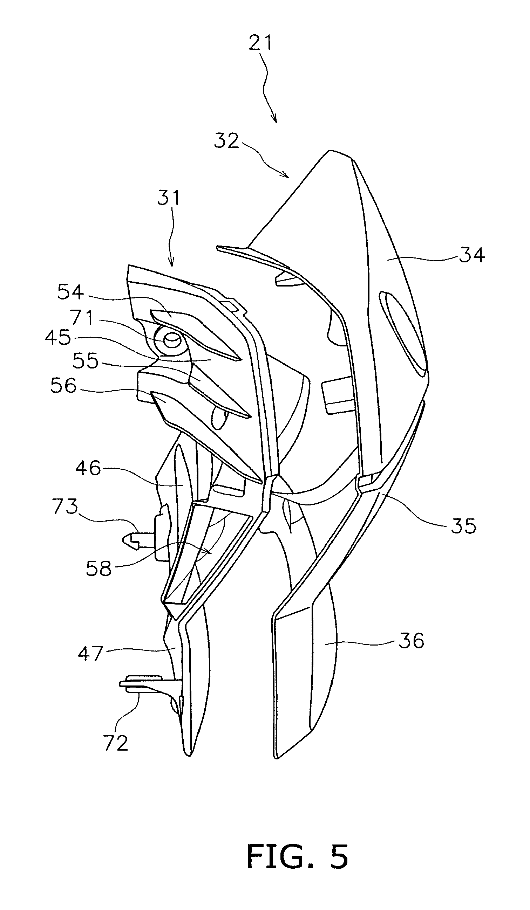

FIG. 5 is an exploded view of the left shroud 21. As illustrated in FIG. 5, the left shroud 21 includes an inner lateral member 31 and an outer lateral member 32. The outer lateral member 32 is a member provided separately from the inner lateral member 31. The inner lateral member 31 is made of resin, and is a single component integrally shaped. The outer lateral member 32 is made of resin, and is a single component integrally shaped. The outer lateral member 32 is disposed laterally outwards of the inner lateral member 31.

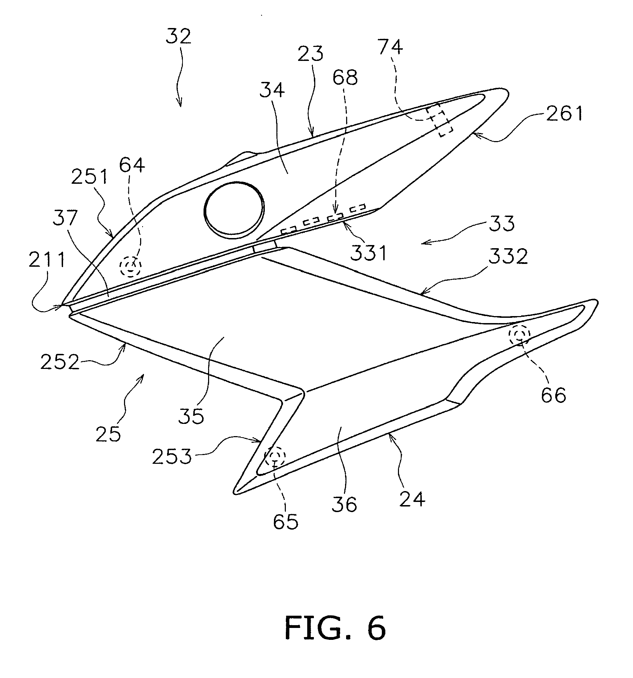

FIG. 6 is a side view of the outer lateral member 32. In a vehicle side view, the outer lateral member 32 includes the aforementioned edges of the left shroud 21, i.e., the upper edge 23, the front edge 25 and the lower edge 24. A rear edge 33 of the outer lateral member 32 includes the aforementioned first rear edge portion 261 of the left shroud 21. Further, the rear edge 33 of the outer lateral member 32 includes a first outer rear edge portion 331 and a second outer rear edge portion 332. The first outer rear edge portion 331 is positioned under the first rear edge portion 261. The first outer rear edge portion 331 is extended forwards and obliquely downwards from the lower end of the first rear edge portion 261. The second outer rear edge portion 332 is positioned under the first outer rear edge portion 331. The second outer rear edge portion 332 is extended rearwards and obliquely downwards from the front end of the first outer rear edge portion 331. As illustrated in FIG. 3, the second outer rear edge portion 332 is positioned forwards of the second rear edge portion 262.

As illustrated in FIG. 6, the outer lateral member 32 includes a first outer lateral surface portion 34, a second outer lateral surface portion 35 and a third outer lateral surface portion 36. The first outer lateral surface portion 34 is positioned between the first front edge portion 251 and the first rear edge portion 261. The second outer lateral surface portion 35 is positioned between the first outer lateral surface portion 34 and the third outer lateral surface portion 36. The second outer lateral surface portion 35 is positioned between the second front edge portion 252 and the second outer rear edge portion 332. The third outer lateral surface portion 36 is positioned rearwards of the third front edge portion 253. Further, the outer lateral surface of the outer lateral member 32 includes a groove portion 37. The groove portion 37 is positioned between the first outer lateral surface portion 34 and the second outer lateral surface portion 35. The groove portion 37 is slanted rearwards and obliquely upwards. The groove portion 37 is continued to the front end portion 211 of the left shroud 21. The groove portion 37 is continued to the first outer rear edge portion 331.

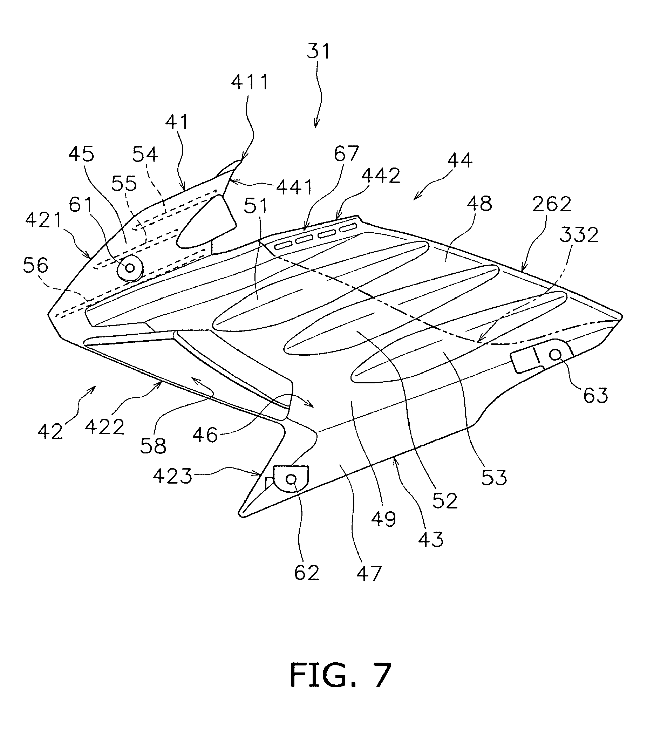

FIG. 7 is a side view of the inner lateral member 31. In a vehicle side view, an upper edge 41 of the inner lateral member 31 is slanted similarly to the upper edge 23 of the outer lateral member 32. A front edge 42 of the inner lateral member 31 has a shape matched with that of the front edge 25 of the outer lateral member 32. When described in detail, the front edge 42 of the inner lateral member 31 includes a first inner front edge portion 421, a second inner front edge portion 422 and a third inner front edge portion 423. The first inner front edge portion 421 has a shape matched with that of the first front edge portion 251. The second inner front edge portion 422 has a shape matched with that of the second front edge portion 252. The third inner front edge portion 423 has a shape matched with that of the third front edge portion 253. A lower edge 43 of the inner lateral member 31 has a shape matched with that of the lower edge 24 of the outer lateral member 32.

A rear edge 44 of the inner lateral member 31 includes a first inner rear edge portion 441 and a second inner rear edge portion 442. The first inner rear edge portion 441 is extended forwards and obliquely downwards from the rear end of the upper edge 41. The second inner rear edge portion 442 is extended rearwards and obliquely upwards from the lower end of the first inner rear edge portion 441. The rear edge 44 of the inner lateral member 31 includes the aforementioned second rear edge portion 262 of the left shroud 21. The second rear edge portion 262 is extended rearwards and obliquely downwards from the rear end of the second inner rear edge portion 442.

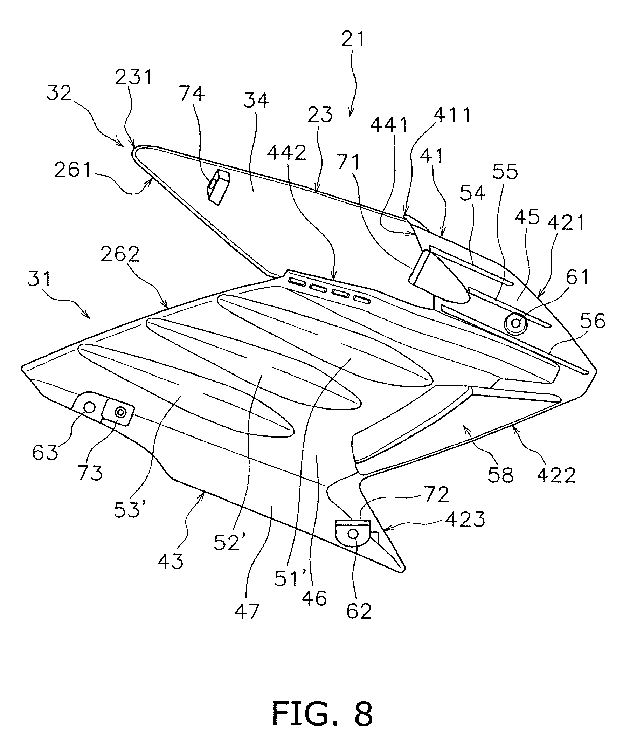

FIG. 8 is a diagram illustrating the inner lateral surface of the left shroud 21. As illustrated in FIGS. 3 and 8, a rear end 411 of the upper edge 41 of the inner lateral member 31 is positioned forwards of a rear end 231 of the upper edge 23 of the outer lateral member 32. The first inner rear edge portion 441 is positioned forwards of the first rear edge portion 261 of the outer lateral member 32. The first inner rear edge portion 441 is positioned laterally inwards of the first outer lateral surface portion 34. As illustrated in FIG. 3, the second inner rear edge portion 442 is slanted similarly to the first outer rear edge portion 331. The second rear edge portion 262 is positioned rearwards of the second outer rear edge portion 332.

As illustrated in FIG. 7, the inner lateral member 31 includes a first inner lateral surface portion 45, a second inner lateral surface portion 46 and a third inner lateral surface portion 47. The first inner lateral surface portion 45 is positioned between the first inner front edge portion 421 and the first inner rear edge portion 441. The first inner lateral surface portion 45 is positioned laterally inwards of the first outer lateral surface portion 34. The second inner lateral surface portion 46 is positioned between the first inner lateral surface portion 45 and the third inner lateral surface portion 47. The second inner lateral surface portion 46 is positioned between the second inner front edge portion 422 and the second rear edge portion 262. The front portion of the second inner lateral surface portion 46 is positioned laterally inwards of the second outer lateral surface portion 35. The third inner lateral surface portion 47 is positioned rearwards of the third inner front edge portion 423. The third inner lateral surface portion 47 is positioned laterally inwards of the third outer lateral surface portion 36.

As illustrated in FIG. 3, the inner lateral member 31 includes an inner lateral member rear portion 48. In a vehicle side view, the inner lateral member rear portion 48 is positioned rearwards of the rear edge 33 of the outer lateral member 32. When described in detail, the inner lateral member rear portion 48 is a portion of the second inner lateral surface portion 46, i.e., a portion positioned rearwards of the second outer rear edge portion 332. In a vehicle side view, the inner lateral member rear portion 48 is exposed to the outside without being covered with the outer lateral member 32.

As illustrated in FIG. 7, the inner lateral member 31 includes an inner lateral member front portion 49. It should be noted that in FIG. 7, the position of the second outer rear edge portion 332 is depicted with a dashed two-dotted line. The inner lateral member front portion 49 is positioned forwards of the inner lateral member rear portion 48. When described in detail, the inner lateral member front portion 49 is a portion of the lateral surface of the inner lateral member 31, i.e., a portion positioned forwards of the second outer rear edge portion 332. In a vehicle side view, the inner lateral member front portion 49 is covered with the outer lateral member 32.

The inner lateral member 31 includes a plurality of outer fin portions 51 to 53 and a plurality of inner fin portions 54 to 56. The outer fin portions 51 to 53 direct the air stream on the outer lateral surface of the inner lateral member 31. The outer fin portions 51 to 53 are protruded laterally outwards from the inner lateral member 31. The outer fin portions 51 to 53 are slanted rearwards and obliquely upwards. The outer fin portions 51 to 53 are disposed on the second inner lateral surface portion 46. When described in detail, the inner lateral member 31 includes the first outer fin portion 51, the second outer fin portion 52 and the third outer fin portion 53. The first outer fin portion 51, the second outer fin portion 52 and the third outer fin portion 53 are disposed away from each other in the up-and-down direction. The front end of the second outer fin portion 52 is positioned rearwards of that of the first outer fin portion 51. The rear end of the second outer fin portion 52 is positioned rearwards of that of the first outer fin portion 51. The front end of the third outer fin portion 53 is positioned rearwards of that of the second outer fin portion 52. The rear end of the third outer fin portion 53 is positioned rearwards of that of the second outer fin portion 52.

The rear portions of the outer fin portions 51 to 53 are disposed on the inner lateral member rear portion 48. Therefore, as illustrated in FIG. 3, the rear portions of the outer fin portions 51 to 53 are exposed to the outside in a vehicle side view and are thereby visible. The front portions of the outer fin portions 51 to 53 are positioned laterally inwards of the outer lateral member 32. In other words, the front portions of the outer fin portions 51 to 53 are covered with the outer lateral member 32 in a vehicle side view.

As illustrated in FIGS. 5 and 8, the inner fin portions 54 to 56 direct the air stream on the inner lateral surface of the inner lateral member 31. The inner fin portions 54 to 56 are protruded laterally inwards from the inner lateral member 31. The inner fin portions 54 to 56 are slanted rearwards and obliquely upwards. When described in detail, the inner lateral member 31 includes the first inner fin portion 54, the second inner fin portion 55 and the third inner fin portion 56. The first inner fin portion 54, the second inner fin portion 55 and the third inner fm portion 56 are disposed away from each other in the up-and-down direction. The front end of the second inner fin portion 55 is positioned forwards of that of the first inner fin portion 54. The rear end of the second inner fin portion 55 is positioned forwards of that of the first inner fin portion 54. The front end of the third inner fin portion 56 is positioned forwards of that of the second inner fin portion 55. The rear end of the third inner fin portion 56 is positioned rearwards of that of the second inner fin portion 55. The rear end of the third inner fin portion 56 is positioned forwards of that of the first inner fin portion 54.

The inner fin portions 54 to 56 are disposed on the inner lateral member front portion 49. When described in detail, the inner fin portions 54 to 56 are disposed on the first inner lateral surface portion 45. As illustrated in FIGS. 2 and 4, the inner fin portions 54 to 56 are visible in a vehicle front view. In other words, at least a portion of the inner lateral surface of the inner lateral member 31 is visible in a vehicle front view. Thus, the inner lateral surface of the inner lateral member 31 is disposed for receiving and directing the air stream flowing from ahead. The inner fin portions 54 to 56 are positioned laterally outwards of the recessed portion 50 of the fuel tank 5.

It should be noted that as illustrated in FIG. 8, the inner lateral surface of the inner lateral member 31 includes fin-shaped recessed portions 51', 52' and 53'. The fin-shaped recessed portions 51', 52' and 53' are recesses produced in forming the outer fin portions 51 to 53.

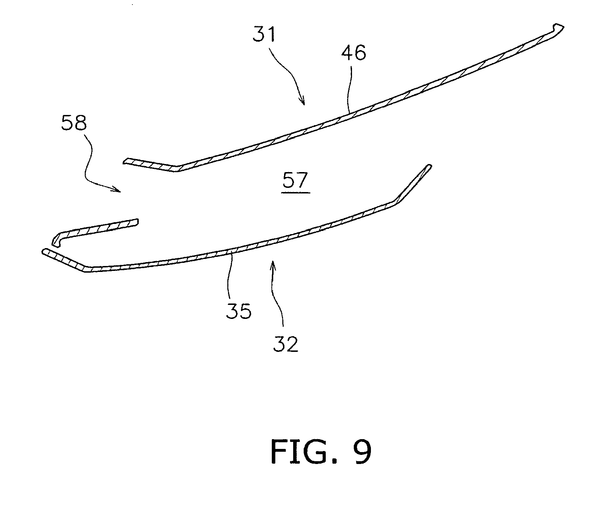

FIG. 9 is a cross-sectional view of FIG. 3 taken along a line A-A. As illustrated in FIG. 9, an airflow path 57 is produced between the inner lateral member 31 and the outer lateral member 32. When described in detail, the airflow path 57 is produced between the second outer lateral surface portion 35 and the second inner lateral surface portion 46.

As illustrated in FIGS. 2 and 4, the left shroud 21 includes an opening 58. The airflow path 57 and the space produced laterally inwards of the inner lateral member 31 are communicated through the opening 58. The opening 58 is visible in a vehicle front view. In the vehicle front view, the opening 58 has a shape elongated in the up-and-down direction. The opening 58 is bored in the inner lateral member 31. When described in detail, the opening 58 is bored in the second inner lateral surface portion 46 as illustrated in FIG. 7. In a vehicle side view, the opening 58 is positioned forwards of the outer fin portions 51 to 53. The upper end of the opening 58 is positioned higher than the front end of the second outer fin portion 52. The lower end of the opening 58 is positioned below the front end of the second outer fin portion 52. When described in detail, the upper end of the opening 58 is positioned at roughly the same height as the front end of the first outer fin portion 51. The lower end of the opening 58 is positioned below the front end of the third outer fin portion 53. In a vehicle side view, the opening 58 is positioned under the inner fin portions 54 to 56.

The inner lateral member 31 includes a plurality of fixation holes 61 to 63. The plural fixation holes 61 to 63 penetrate through the inner lateral member 31. As illustrated in FIG. 6, the outer lateral member 32 includes a plurality of screw holes 64 to 66. The screw holes 64 to 66 are disposed in positions corresponding to those of the fixation holes 61 to 63 of the inner lateral member 31. The inner lateral member 31 is fixed to the outer lateral member 32 by inserting screws into the fixation holes 61 to 63 and the screw holes 64 to 66.

When described in detail, the inner lateral member 31 includes the first fixation hole 61, the second fixation hole 62 and the third fixation hole 63. The first fixation hole 61 is bored in the first inner lateral surface portion 45. The second fixation hole 62 and the third fixation hole 63 are bored in the third inner lateral surface portion 47. The second fixation hole 62 is disposed rearwards of the first fixation hole 61. The third fixation hole 63 is disposed rearwards of the second fixation hole 62. The second fixation hole 62 and the third fixation hole 63 are disposed below the first fixation hole 61.

The outer lateral member 32 includes the first screw hole 64, the second screw hole 65 and the third screw hole 66. The first screw hole 64 is bored in a position corresponding to that of the first fixation hole 61. The second screw hole 65 is disposed in a position corresponding to that of the second fixation hole 62. The third screw hole 66 is disposed in a position corresponding to that of the third fixation hole 63. The first screw hole 64 is bored in the first outer lateral surface portion 34. The second screw hole 65 and the third screw hole 66 are bored in the third outer lateral surface portion 36.

As illustrated in FIG. 7, the inner lateral member 31 includes a first fixation portion 67. The first fixation portion 67 fixes the inner lateral member 31 and the outer lateral member 32 to each other. The first fixation portion 67 is positioned between the outer fin portions 51 to 53 and the inner fin portions 54 to 56. When described in detail, the extended directions of the outer fin portions 51 to 53 and those of the inner fin portions 54 to 56 are roughly parallel to each other. The first fixation portion 67 is positioned between the outer fin portions 51 to 53 and the inner fin portions 54 to 56 in a direction perpendicular to the extended directions of the outer fin portions 51 to 53 and those of the inner fin portions 54 to 56. As illustrated in FIG. 6, the outer lateral member 32 includes a second fixation portion 68. The first fixation portion 67 is fixed to the second fixation portion 68.

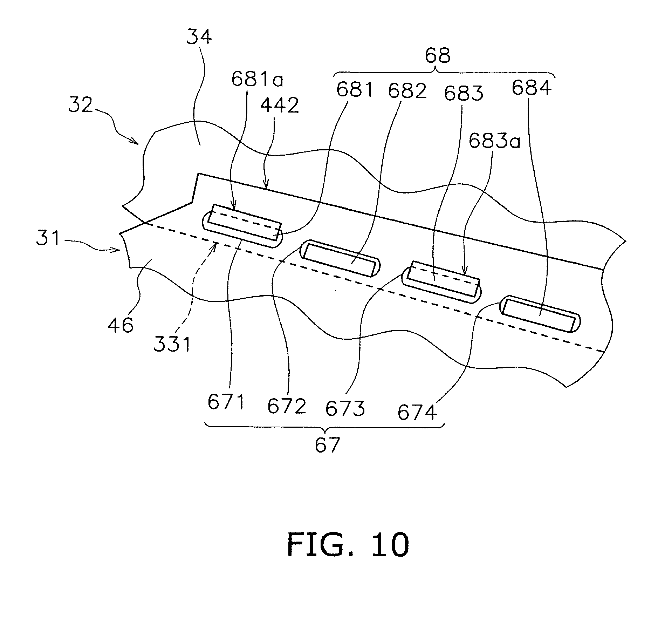

FIG. 10 is an enlarged view of the inner lateral surface of the left shroud 21. The first fixation portion 67 includes a plurality of apertures 671 to 674. The second fixation portion 68 includes a plurality of protrusions 681 to 684. The first fixation portion 67 and the second fixation portion 68 are fixed to each other by inserting the protrusions 681 to 684 of the outer lateral member 32 into the apertures 671 to 674 of the inner lateral member 31.

When described in detail, the first fixation portion 67 includes the first aperture 671, the second aperture 672, the third aperture 673 and the fourth aperture 674. The first to fourth apertures 671 to 674 are aligned while being disposed rearwards and obliquely upwards. The first to fourth apertures 671 to 674 are disposed along the second inner rear edge portion 442. As illustrated in FIG. 10, the second fixation portion 68 includes the first protrusion 681, the second protrusion 682, the third protrusion 683 and the fourth protrusion 684. The first to fourth protrusions 681 to 684 are disposed along the first outer rear edge portion 331. The first to fourth protrusions 681 to 684 are respectively inserted into the first to fourth apertures 671 to 674. The second protrusion 682 and the fourth protrusion 684 are disposed closer to the first outer rear edge portion 331 than the first protrusion 681 and the third protrusion 683. Therefore, when the second protrusion 682 is inserted into the second aperture 672, the second protrusion 682 presses the edge of the second aperture 672 in a direction of hooking the first protrusion 681 on the edge of the first aperture 671. Likewise, when the fourth protrusion 684 is inserted into the fourth aperture 674, the fourth protrusion 684 presses the edge of the fourth aperture 674 in a direction of hooking the first protrusion 681 on the edge of the first aperture 671. The first protrusion 681 includes a pawl portion 681 a. The pawl portion 681a is hooked on the edge of the first aperture 671. The third protrusion 683 includes a pawl portion 683a. The pawl portion 683a is hooked on the edge of the third aperture 673.

As illustrated in FIG. 8, the left shroud 21 includes a plurality of attachment portions 71 to 74. The attachment portions 71 to 74 are portions for attaching the left shroud 21 to the fuel tank 5. A portion of the plural attachment portions 71 to 74 is mounted to the outer lateral member 32. The rest of the plural attachment portions 71 to 74 are mounted to the inner lateral member 31.

When described in detail, the left shroud 21 includes the first attachment portion 71, the second attachment portion 72, the third attachment portion 73 and the fourth attachment portion 74. The first attachment portion 71, the second attachment portion 72 and the third attachment portion 73 are mounted to the inner lateral member 31. The fourth attachment portion 74 is mounted to the outer lateral member 32. The first attachment portion 71 is mounted to the first inner lateral surface portion 45. The second attachment portion 72 and the third attachment portion 73 are mounted to the third inner lateral surface portion 47. The second attachment portion 72 is disposed adjacently to the second fixation hole 62. The third attachment portion 73 is disposed adjacently to the third fixation hole 63. The fourth attachment portion 74 is mounted to the first outer lateral surface portion 34. The fourth attachment portion 74 is positioned over the first rear edge portion 261. The fourth attachment portion 74 is positioned rearwards of the first inner rear edge portion 441. Each of the first attachment portion 71, the second attachment portion 72 and the fourth attachment portion 74 includes an aperture. The third attachment portion 73 has a protrusion-like shape.

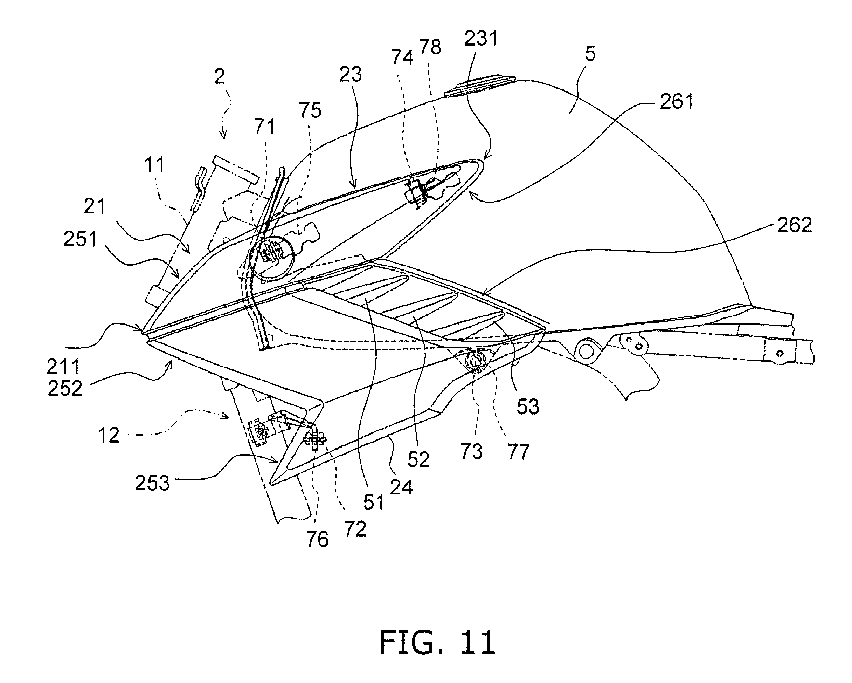

FIG. 11 is a side view of the fuel tank 5, the left shroud 21 and a portion of the vehicle body frame 2. As illustrated in FIG. 11, the fuel tank 5 includes a first shroud attachment portion 75, a third shroud attachment portion 77 and a fourth shroud attachment portion 78. The vehicle body frame 2 includes a second shroud attachment portion 76. The first to fourth shroud attachment portions 75 to 78 are portions to which the left shroud 21 is attached. Each of the first shroud attachment portion 75 and the fourth shroud attachment portion 78 has a protrusion-like shape. The third shroud attachment portion 77 has a hole-like shape. The second shroud attachment portion 76 is a bracket attached to the front frame 12. The second shroud attachment portion 76 has a protrusion-like shape.

The first attachment portion 71 is attached to the first shroud attachment portion 75. The second attachment portion 72 is attached to the second shroud attachment portion 76. The third attachment portion 73 is attached to the third shroud attachment portion 77. The fourth attachment portion 74 is attached to the fourth shroud attachment portion 78.

The right shroud 22 includes the same structure as the left shroud 21 except for the structure that the right shroud 22 is bilaterally symmetric to the left shroud 21. Therefore, detailed explanation will not be made for the right shroud 22.

Next, explanation will be made for the air stream in the motorcycle 1 according to the present exemplary embodiment. The air flows laterally inwards of the left shroud 21 from ahead of the vehicle. The air is partially directed by the inner fin portions 54 to 56 on the laterally inward of the left shroud 21, and flows to the recessed portion 50 of the fuel tank 5 and the engine 3. On the laterally inward of the left shroud 21, the air partially flows into the airflow path 57 within the left shroud 21 through the opening 58. The inner lateral member rear portion 48 is disposed rearwards of the airflow path 57, and the air from the airflow path 57 flows along the outer lateral surface of the inner lateral member rear portion 48. At this time, the air within the airflow path 57 is directed by the outer fin portions 51 to 53, and flows to the rearward of the left shroud 21. As described above, the left shroud 21 directs the air stream from ahead of the vehicle to the engine 3 by the inner lateral surface of the inner lateral member 31, while directing a portion of the air stream to the rearward of the left shroud 21 through the airflow path 57.

The motorcycle 1 according to the present teaching includes features as described below. The airflow path 57 is produced between the inner lateral member 31 and the outer lateral member 32. Therefore, the air flows through the both laterally inward and laterally outward of the inner lateral member 31. Therefore, the force of the air stream on the laterally inward of the inner lateral member 31 and that of the air stream on the laterally outward of the inner lateral member 31 are balanced out. Accordingly, it is possible to reduce the force to be received by the inner lateral member 31.

Further, the inner lateral member rear portion 48 is positioned rearwards of the rear edge 33 of the outer lateral member 32 in a vehicle side view. Therefore, it is possible to reduce the force that the outer lateral member 32 receives from the air stream in comparison with the structure that the outer lateral member 32 is extended to a position rearward of the inner lateral member rear portion 48. Therefore, it is possible to reduce the forces to be received from the air streams on the both of the inner lateral member 31 and the outer lateral member 32. In other words, it is possible to reduce the force that the entire left shroud 21 receives from the air stream. This is also true of the right shroud 22.

As described above, in the motorcycle 1 according to the present exemplary embodiment, large attachment strength can be reliably achieved for the left and right shrouds 21 and 22 even when the amount of air to be directed to the engine 3 is increased by enlarging the left and right shrouds 21 and 22. In other words, it is simultaneously possible to increase the amount of air to be directed to the engine 3 and reliably achieve attachment strength required for the left and right shrouds 21 and 22. Further, less restriction is imposed on the shapes of the shrouds 21 and 22 in maintaining the required attachments strength. Therefore, flexibility in shapes of the shrouds 21 and 22 can be enhanced.

The inner lateral member rear portion 48 includes the outer fin portions 51 to 53. Therefore, the air stream, flowing through the laterally outward of the inner lateral member rear portion 48, can be directed by the outer fin portions 51 to 53. Accordingly, the air can smoothly flow through the laterally outward of the inner lateral member rear portion 48. Further, the outer fin portions 51 to 53 receive force from the air stream by directing the air stream. Accordingly, the force of inwardly pressing the inner lateral member 31 is produced, and can be balanced out with the force applied from the inward of the inner lateral member 31. The required attachment strength can be thereby easily maintained.

The outer fin portions 51 to 53 are at least partially visible in a vehicle side view. Therefore, the air stream, flowing through the space exposed to the outside on the laterally outward of the inner lateral member rear portion 48, can be directed by the outer fin portions 51 to 53.

The inner lateral member front portion 49 includes the inner fin portions 54 to 56. Therefore, the air stream, flowing through the laterally inward of the inner lateral member 31, can be directed by the inner fin portions 54 to 56. Accordingly, the air can smoothly flow through the laterally inward of the inner lateral member 31. Further, the inner fin portions 54 to 56 receive force from the air stream when directing the air stream. Accordingly, the force of outwardly pressing the inner lateral member 31 is produced, and can be balanced out with the force applied from the outward of the inner lateral member 31. The required attachment strength can be thereby easily maintained.

The inner fin portions 54 to 56 are at least partially visible in a vehicle front view. Therefore, the air stream, flowing into the airflow path 57 from ahead of the vehicle, can be efficiently directed by the inner fin portions 54 to 56.

The outer fin portions 51 to 53 and the inner fin portions 54 to 56 are disposed on the inner lateral member 31. Therefore, flexibility in shape of the outer lateral member 32 can be enhanced, and further, flexibility in appearance of the shrouds 21 and 22 can be enhanced.

The inner fin portions 54 to 56 are positioned laterally outwards of the recessed portion 50 of the fuel tank 5. Therefore, the air stream can be directed to the recessed portion 50 of the fuel tank 5 by the inner fin portions 54 to 56. Accordingly, the fuel tank 5 can be efficiently cooled down.

Each shroud includes the opening 58. Therefore, the air stream, flowing through the laterally inward of the inner lateral member 31, can be partially directed into the airflow path 57 through the opening 58. Accordingly, the air stream can be efficiently directed to the both laterally inward and outward of the inner lateral member 31. As a result, it is possible to balance out the force from the air stream flowing through the laterally inward of the inner lateral member 31 and that from the air stream flowing through the laterally outward of the inner lateral member 31. Accordingly, it is possible to reduce the force to be received by the inner lateral member 31, and the required attachment strength can be easily maintained.

In a vehicle side view, the opening 58 is positioned forwards of the outer fin portions 51 to 53. Therefore, the air stream, flowing into the airflow path 57 through the opening 58, can be directed by the outer fin portions 51 to 53.

In a vehicle side view, the opening 58 is positioned under the inner fin portions 54 to 56. Therefore, the air stream on the laterally inward of the inner lateral member 31 can be directed while being divided into the air stream to be directed by the inner fin portions 54 to 56 and the air stream flowing into the airflow path 57 through the opening 58.

The opening 58 is bored in the inner lateral member 31. However, the inner lateral member 31 is provided with the outer fin portions 51 to 53 and the inner fin portions 54 to 56. Therefore, large stiffness can be reliably achieved for the inner lateral member 31 even when the opening 58 is bored in the inner lateral member 31.

The first fixation portion 67 of the inner lateral member 31 is positioned between the outer fin portions 51 to 53 and the inner fin portions 54 to 56. Therefore, the inner lateral member 31 and the outer lateral member 32 are fixed at the portion positioned between the outer fin portions 51 to 53 receiving force from the air stream and the inner fin portions 54 to 56 receiving force from the air stream. Therefore, the inner lateral member 31 and the outer lateral member 32 can be rigidly fixed to each other.

The first protrusion 681 and the third protrusion 683 are pressed by the second protrusion 682 and the fourth protrusion 684 so as to be respectively hooked on the edge of the first aperture 671 and that of the third aperture 673. Therefore, the inner lateral member 31 and the outer lateral member 32 can be rigidly fixed to each other.

The opening 58 is visible in a vehicle front view. In this case, the air stream from ahead of the vehicle can be efficiently taken into the opening 58.

The left and right shrouds 21 and 22 are disposed separately from the head light unit 16. Therefore, flexibility in shapes of the left and right shrouds 21 and 22 can be further enhanced in comparison with the structure that the left and right shrouds 21 and 22 are integrated with the head light unit 16.

An exemplary embodiment of the present teaching has been explained above. However, the present teaching is not limited to the aforementioned exemplary embodiment, and a variety of changes can be made without departing from the scope of the appended claims.

The shapes of the left and right shrouds 21 and 22 may be changed without being limited to those described in the aforementioned exemplary embodiment. For example, the position of the front end portion of the left shroud 21 is not limited to the position between the first front edge portion 251 and the second front edge portion 252. The front end portion of the left shroud 21 may be disposed in any other suitable position. Further, the shape of the inner lateral member 31 is not limited to that described in the aforementioned exemplary embodiment. The inner lateral member 31 may be formed in any other suitable shape. Further, the inner lateral member 31 may be made of material except for resin. Yet further, the inner lateral member 31 may be composed of a plurality of components. On the other hand, the shape of the outer lateral member 32 is not limited to that described in the aforementioned exemplary embodiment. The outer lateral member 32 may be formed in any other suitable shape. Further, the outer lateral member 32 may be made of material except for resin. Yet further, the outer lateral member 32 may be composed of a plurality of components. Moreover, the right shroud 22 is not limited to be bilaterally symmetric to the left shroud 21. In other words, at least either of the shrouds is required to include the features of the present teaching.

All the plural attachment portions 71 to 74 may be mounted to the outer lateral member 32. Alternatively, all the plural attachment portions 71 to 74 may be mounted to the inner lateral member 31.

The number of the inner fin portions 54 to 56 is not limited to three, and may be greater or less than three. Alternatively, the inner fin portions 54 to 56 may not be provided. Further, the inner fin portions 54 to 56 may be invisible in a vehicle front view. Alternatively, only a portion of the inner fin portions 54 to 56 may be visible in a vehicle front view.

The number of the outer fin portions 51 to 53 is not limited to three, and may be greater or less than three. Alternatively, the outer fin portions 51 to 53 may not be provided. Further, the outer fin portions 51 to 53 may not be necessarily disposed on the inner lateral member 31, and may be disposed on the outer lateral member 32. Yet further, the outer fin portions 51 to 53 may be invisible in a vehicle front view. Alternatively, the outer fin portions 51 to 53 may be entirely visible in a vehicle front view.

The position of the opening 58 is not limited to that described in the aforementioned exemplary embodiment. The opening 58 may be positioned in any other suitable position. For example, the opening 58 may not be necessarily bored in the inner lateral member 31, and may be bored in the outer lateral member 32. Alternatively, the opening 58 may be bored across the inner lateral member 31 and the outer lateral member 32. Further, the opening 58 may be invisible in a vehicle front view. Alternatively, only a portion of the opening 58 may be visible in the vehicle front view.

## Claims

1. A motorcycle, comprising:
a vehicle body frame (2) including a head pipe (11);
a head light unit (16) being disposed forwards of the head pipe (11);
a fuel tank (5) being disposed rearwards of the head pipe (11) and astride the vehicle body frame (2);
an engine (3) being disposed under the fuel tank (5); and
a shroud (21) being attached to the fuel tank (5), the shroud (21) being disposed laterally outwards of the fuel tank (5), the shroud (21) having a front end portion (211), the front end portion (211) being positioned forwards of the fuel tank (5), wherein
the shroud (21) is disposed separately from the head light unit (16),
the shroud (21) includes an inner lateral member (31) and an outer lateral member (32), the outer lateral member (32) being provided separately from the inner lateral member (31),
the outer lateral member (32) is disposed laterally outwards of the inner lateral member (31),
the inner lateral member (31) and the outer lateral member (32) produce an airflow path therebetween, and
the inner lateral member (31) includes an inner lateral member rear portion (48), the inner lateral member rear portion (48) being disposed rearwards of a rear edge (33) of the outer lateral member (32) in a vehicle side view,
**characterized in that**
a portion of the inner lateral member (31) of the shroud (21) is disposed rearward of the engine (3), and
a fin portion (51, 52, 53) for directing an air stream toward the backwards is disposed between the inner lateral member (31) and the outer lateral member (32).

2. A motorcycle according to claim 1, wherein the inner lateral member rear portion (48) includes an outer fin portion (51, 52, 53) for directing an air stream on an outer lateral surface of the inner lateral member rear portion (48).

3. A motorcycle according to claim 2, wherein the outer fin portion (51, 52, 53) is at least partially visible in a vehicle side view.

4. A motorcycle according to any one of claims 1 to 3, wherein
the inner lateral member (31) includes an inner lateral member front portion (49), the inner lateral member front portion (49) being positioned forwards of the inner lateral member rear portion (48), and
the inner lateral member front portion (49) includes an inner fin portion (54, 55, 56), the inner fin portion (54, 55, 56) directing an air stream on an inner lateral surface of the inner lateral member front portion (49).

5. A motorcycle according to claim 4, wherein the inner fin portion (54, 55, 56) is at least partially visible in a vehicle front view.

6. A motorcycle according to claim 1, wherein the inner lateral member (31) includes an outer fin portion (51, 52, 53) and an inner fin portion (54, 55, 56), the outer fin portion (51, 52, 53) directing an air stream on an outer lateral surface of the inner lateral member (31), the inner fin portion (54, 55, 56) directing an air stream on an inner lateral surface of the inner lateral member (31).

7. A motorcycle according to claim 6, wherein
the fuel tank (5) includes a recessed portion (50) upwardly recessed on a bottom surface thereof, and
the inner fin portion (54, 55, 56) is positioned laterally outwards of the recessed portion (50) in a vehicle front view.

8. A motorcycle according to claim 6 or 7, wherein the shroud (21) includes an opening (58), the opening (58) causing the airflow path and a space produced laterally inwards of the inner lateral member (31) to communicate with each other.

9. A motorcycle according to claim 8, wherein the opening (58) is positioned forwards of the outer fin portion (51, 52, 53) in a vehicle side view.

10. A motorcycle according to claim 8 or 9, wherein the opening (58) is positioned under the inner fin portion (54, 55, 56) in a vehicle side view.

11. A motorcycle according to claim 9 or 10, wherein the opening (58) is bored in the inner lateral member (31).

12. A motorcycle according to any one of claims 6 to 11, wherein
the inner lateral member (31) includes a fixation portion (67), the fixation portion (67) fixing the inner lateral member (31) and the outer lateral member (32) to each other, and
the fixation portion (67) is positioned between the outer fin portion (51, 52, 53) and the inner fin portion (54, 55, 56) in a vehicle side view.

13. A motorcycle according to claim 12, wherein
the fixation portion (67) includes a first aperture (671) and a second aperture (672),
the outer lateral member (32) includes a first protrusion (681) and a second protrusion (682),
the first protrusion (681) is configured to be hooked on an edge of the first aperture (671), and
the second protrusion (682) is configured to press an edge of the second aperture (672) in a direction of causing the first protrusion (681) to be hooked on the edge of the first aperture (671).

14. A motorcycle according to any one of claims 1 to 7, wherein the shroud (21) includes an opening (58) causing the airflow path and a space produced laterally inwards of the inner lateral member (31) to communicate with each other.

15. A motorcycle according to any one of claims 8 to 11 and 14, wherein the opening (58) is visible in a vehicle front view.

16. A motorcycle according to any one of claims 1 to 15, wherein
the shroud (21) includes a plurality of attachment portions (71, 72, 73, 74) for attaching the shroud (21) to the fuel tank (5),
a portion of the plurality of attachment portions (71, 72, 73, 74) is mounted to the outer lateral member (32), and
the rest of the plurality of attachment portions (71, 72, 73, 74) is mounted to the inner lateral member (31).

## Patentansprüche

1. Motorrad, das umfasst:
einen Fahrzeugkörperrahmen (2) einschließlich eines Lenkkopfrohrs (11),
eine Scheinwerfereinheit (16), die vor dem Lenkkopfrohr (11) angeordnet ist,
einen Kraftstofftank (5), der hinter dem Lenkkopfrohr (11) und auf beiden Seiten des Fahrzeugkarosserierahmens (2) angeordnet ist,
einen Motor (3) der unter dem Kraftstofftank (5) angeordnet ist, und
eine Blende (21), die an dem Kraftstofftank (5) befestigt ist, wobei die Blende (21) lateral außerhalb des Kraftstofftanks (5) angeordnet ist, wobei die Blende (21) einen vorderen Endteil (211) aufweist, wobei der vordere Endteil (211) vor dem Kraftstofftank (5) angeordnet ist, wobei:
die Blende (21) separat von der Scheinwerfereinheit (16) angeordnet ist,
die Blende (21) ein inneres laterales Glied (31) und ein äußeres laterales Glied (32) umfasst, wobei das äußere laterale Glied (32) separat von dem inneren lateralen Glied (31) vorgesehen ist,
wobei das äußere laterale Glied (32) lateral außerhalb des inneren lateralen Glieds (31) angeordnet ist,
wobei das innere laterale Glied (31) und das äußere laterale Glied (32) dazwischen einen Luftflusspfad erzeugen, und
das innere laterale Glied (31) einen hinteren Teil (48) des inneren lateralen Glieds umfasst, wobei der hintere Teil (48) des inneren lateralen Glieds hinter einer hinteren Kante (33) des äußeren lateralen Glieds (32) in einer Seitenansicht des Fahrzeugs angeordnet ist,
**dadurch gekennzeichnet, dass**
ein Teil des inneren lateralen Glieds (31) der Blende (21) hinter dem Motor (3) angeordnet ist, und
ein Rippenteil (51, 52, 53) zum Richten eines Luftstroms nach hinten zwischen dem inneren lateralen Glied (31) und dem äußeren lateralen Glied (32) angeordnet ist.

2. Motorrad nach Anspruch 1, wobei der hintere Teil (48) des inneren lateralen Glieds einen äußeren Rippenteil (51, 52, 53) zum Richten eines Luftstroms zu einer äußeren lateralen Fläche des hinteren Teils (48) des inneren lateralen Glieds umfasst.

3. Motorrad nach Anspruch 2, wobei der äußere Rippenteil (51, 52, 53) wenigstens teilweise in einer Seitenansicht des Fahrzeugs sichtbar ist.

4. Motorrad nach einem der Ansprüche 1 bis 3, wobei:
das innere laterale Glied (31) einen vorderen Teil (49) des inneren lateralen Glieds umfasst, wobei der vordere Teil (49) des inneren lateralen Glieds vor dem hinteren Teil (48) des inneren lateralen Glieds angeordnet ist, und
der vordere Teil (49) des inneren lateralen Glieds einen inneren Rippenteil (54, 55, 56) umfasst, wobei der innere Rippenteil (54, 55, 56) einen Luftstrom zu einer inneren lateralen Fläche des vorderen Teils (49) des inneren lateralen Glieds richtet.

5. Motorrad nach Anspruch 4, wobei der innere Rippenteil (54, 55, 56) wenigstens teilweise in einer Vorderansicht des Fahrzeugs sichtbar ist.

6. Motorrad nach Anspruch 1, wobei das innere laterale Glied (31) einen äußeren Rippenteil (51, 52, 53) und einen inneren Rippenteil (54, 55, 56) umfasst, wobei der äußere Rippenteil (51, 52, 53) einen Luftstrom zu einer äußeren lateralen Fläche des inneren lateralen Glieds (31) richtet und wobei der innere Rippenteil (54, 55, 56) einen Luftstrom zu einer inneren lateralen Fläche des inneren lateralen Glieds (31) richtet.

7. Motorrad nach Anspruch 6, wobei:
der Kraftstofftank (5) einen vertieften Teil (50) umfasst, der sich an einer unteren Fläche nach oben hin vertieft, und
der innere Rippenteil (54, 55, 56) lateral außerhalb des vertieften Teils (50) in einer Vorderansicht des Fahrzeugs angeordnet ist.

8. Motorrad nach Anspruch 6 oder 7, wobei die Blende (21) eine Öffnung (58) umfasst, wobei die Öffnung (58) dafür sorgt, dass der Luftflusspfad und ein lateral innerhalb des inneren lateralen Glieds (31) erzeugter Raum miteinander verbunden sind.

9. Motorrad nach Anspruch 8, wobei die Öffnung (58) vor dem äußeren Rippenteil (51, 52, 53) in einer Seitenansicht des Fahrzeugs angeordnet ist.

10. Motorrad nach Anspruch 8 oder 9, wobei die Öffnung (58) unter dem inneren Rippenteil (54, 55, 56) in einer Seitenansicht des Fahrzeugs angeordnet ist.

11. Motorrad nach Anspruch 9 oder 10, wobei die Öffnung (58) in das innere laterale Glied (31) gebohrt ist.

12. Motorrad nach einem der Ansprüche 6 bis 11, wobei:
das innere laterale Glied (31) einen Fixierungsteil (67) umfasst, wobei der Fixierungsteil (67) das innere laterale Glied (31) und das äußere laterale Glied (32) aneinander fixiert, und
der Fixierungsteil (67) zwischen dem äußeren Rippenteil (51, 52, 53) und dem inneren Rippenteil (54, 55, 56) in einer Seitenansicht des Fahrzeugs angeordnet ist.

13. Motorrad nach Anspruch 12, wobei:
der Fixierungsteil (67) eine erste Öffnung (671) und eine zweite Öffnung (672) umfasst,
das äußere laterale Glied (32) einen ersten Vorsprung (681) und einen zweiten Vorsprung (682) umfasst,
der erste Vorsprung (681) konfiguriert ist, um an einer Kante der ersten Öffnung (671) eingehakt zu werden, und
der zweite Vorsprung (682) konfiguriert ist, um eine Kante der zweiten Öffnung (672) in einer Richtung zu drücken und dadurch dafür zu sorgen, dass der erste Vorsprung (681) an der Kante der ersten Öffnung (671) eingehakt wird.

14. Motorrad nach einem der Ansprüche 1 bis 7, wobei die Blende (21) eine Öffnung (58) umfasst, die dafür sorgt, dass der Luftflusspfad und ein lateral innerhalb des inneren lateralen Glieds (31) erzeugter Raum miteinander verbunden sind.

15. Motorrad nach einem der Ansprüche 8 bis 11 und 14, wobei die Öffnung (58) in einer Vorderansicht des Fahrzeugs sichtbar ist.

16. Motorrad nach einem der Ansprüche 1 bis 15, wobei:
die Blende (21) eine Vielzahl von Befestigungsteilen (71, 72, 73, 74) zum Befestigen der Blende (21) an dem Kraftstofftank (5) umfasst,
ein Teil der Vielzahl von Befestigungsteilen (71, 72, 73, 74) an dem äußeren lateralen Glied (32) montiert ist, und
der Rest der Vielzahl von Befestigungsteilen (71, 72, 73, 74) an dem inneren lateralen Glied (31) montiert ist.

## Revendications

1. Motocyclette, comprenant :
un cadre de véhicule (2) incluant un tube de fourche (11),
une unité de phare (16) placée en avant du tube de fourche (11),
un réservoir de carburant (5) placé en arrière du tube de fourche (11) et à cheval sur le cadre du véhicule (2),
un moteur thermique (3) placé sous le réservoir de carburant (5), et
un carénage (21) fixé au réservoir de carburant (5), le carénage (21) étant placé latéralement vers l'extérieur du réservoir de carburant (5), le carénage (21) présentant une partie avant (211), la partie avant (211) étant placée vers l'avant du réservoir de carburant (5), où
le carénage (21) est disposé séparément par rapport à l'unité de phare (16),
le carénage (21) inclut un organe latéral interne (31) et un organe latéral externe (32), l'organe latéral externe (32) étant prévu séparément par rapport à l'organe latéral interne (31),
l'organe latéral externe (32) est placé latéralement vers l'extérieur de l'organe latéral interne (31),
l'organe latéral interne (31) et l'organe latéral externe (32) produisent entre eux un passage d'écoulement de l'air, et
l'organe latéral interne (31) inclut une partie arrière (48) d'organe latéral interne, la partie arrière (48) d'organe latéral interne étant placée vers l'arrière du bord arrière (33) de l'organe latéral externe (32) selon une vue latérale du véhicule,
**caractérisé en ce que**
une partie de l'organe latéral interne (31) du carénage (21) est placée vers l'arrière du moteur (3), et
une partie formant aileron (51, 52, 53) destinée à diriger le flux d'air vers l'arrière est placée entre l'organe latéral interne (31) et l'organe latéral externe (32).

2. Motocyclette selon la revendication 1, dans laquelle la partie arrière (48) d'organe latéral interne inclut une partie formant aileron externe (51, 52, 53) destinée à diriger un flux d'air sur une surface latérale externe de la partie arrière (48) d'organe latéral interne.

3. Motocyclette selon la revendication 2, dans laquelle la partie formant aileron externe (51, 52, 53) est au moins en partie visible selon une vue latérale du véhicule.

4. Motocyclette selon l'une quelconque des revendications 1 à 3, dans laquelle :
l'organe latéral interne (31) inclut une partie avant (49) d'organe latéral interne, la partie avant (49) d'organe latéral interne étant placée vers l'avant de la partie arrière (48) d'organe latéral interne, et
la partie avant (49) d'organe latéral interne inclut une partie formant aileron interne (54, 55, 56), la partie formant aileron interne (54, 55, 56) dirigeant le flux d'air sur une surface latérale interne de la partie avant (49) d'organe latéral interne.

5. Motocyclette selon la revendication 4, dans laquelle la partie formant aileron interne (54, 55, 56) est au moins en partie visible selon une vue avant du véhicule.

6. Motocyclette selon la revendication 1, dans laquelle l'organe latéral interne (31) inclut une partie formant aileron externe (51, 52, 53) et une partie formant aileron interne (54, 55, 56), la partie formant aileron externe (51, 52, 53) dirigeant un flux d'air sur la surface latérale externe de l'organe latéral interne (31), la partie formant aileron interne (54, 55, 56) dirigeant un flux d'air sur la surface latérale interne de l'organe latéral interne (31).

7. Motocyclette selon la revendication 6, dans laquelle
le réservoir de carburant (5) inclut une partie en retrait (50) formant un renforcement vers le haut sur la surface inférieure de celui-ci, et
la partie formant aileron interne (54, 55, 56) est placée latéralement vers l'extérieur de la partie en retrait (50) selon une vue avant du véhicule.

8. Motocyclette selon la revendication 6 ou 7, dans laquelle le carénage (21) inclut une ouverture (58), l'ouverture (58) amenant la mise en communication du passage d'écoulement de l'air avec un espace créé latéralement vers l'intérieur de l'organe latéral interne (31).

9. Motocyclette selon la revendication 8, dans laquelle l'ouverture (58) est positionnée vers l'avant de la partie formant aileron externe (51, 52, 53) selon une vue latérale du véhicule.

10. Motocyclette selon la revendication 8 ou 9, dans laquelle l'ouverture (58) est positionnée en dessous de la partie formant aileron interne (54, 55, 56) selon une vue latérale du véhicule.

11. Motocyclette selon la revendication 9 ou 10, dans laquelle l'ouverture (58) est pratiquée dans l'organe latéral interne (31).

12. Motocyclette selon l'une quelconque des revendications 6 à 11, dans laquelle
l'organe latéral interne (31) inclut une partie servant de fixation (67), la partie de fixation (67) immobilisant l'organe latéral interne (31) et l'organe latéral externe (32) l'un à l'autre, et
la partie de fixation (67) est positionnée entre la partie formant aileron externe (51, 52, 53) et la partie formant aileron interne (54, 55, 56) selon une vue latérale du véhicule.

13. Motocyclette selon la revendication 12, dans laquelle
la partie servant de fixation (67) inclut une première ouverture (671) et une seconde ouverture (672),
l'organe latéral externe (32) inclut une première protubérance (681) et une seconde protubérance (682),
la première protubérance (681) est configurée pour être accrochée sur un bord de la première ouverture (671), et
la seconde protubérance (682) est configurée pour comprimer une bordure de la seconde ouverture (672) dans une direction d'accrochage de la première protubérance (681) sur le bord de la première ouverture (671).

14. Motocyclette selon l'une quelconque des revendications 1 à 7, dans laquelle le carénage (21) inclut une ouverture (58) amenant la mise en communication du passage d'écoulement de l'air avec un espace produit latéralement vers l'intérieur de l'organe latéral interne (31).

15. Motocyclette selon l'une quelconque des revendications 8 à 11 et 14, dans laquelle l'ouverture (58) est visible selon une vue avant du véhicule.

16. Motocyclette selon l'une quelconque des revendications 1 à 15, dans laquelle
le carénage (21) inclut une pluralité de parties de fixation (71, 72, 73, 74) permettant de fixer le carénage (21) sur le réservoir de carburant (5),
une partie de la pluralité de parties de fixation (71, 72, 73, 74) est montée sur l'organe latéral externe (32), et
le reste de la pluralité de parties de fixation (71, 72, 73, 74) est monté sur l'organe latéral interne (31).
